# FASCICULE DE BREVET EUROPEEN

(11) **EP 2 303 982 B1**
(45) Date de publication et mention de la délivrance du brevet: **04.04.2012**
(21) Numéro de dépôt: 09772868.7
(22) Date de dépôt: 09.06.2009
(51) Int. Cl.: C08F 220/00, C09K 8/12, C09K 8/04, C09K 3/00, C08F 2/16, C08F 220/06, C08F 220/18, C08F 220/28, C08F 220/56, C08F 220/58, C09K 8/88, C08F 220/16

(54) **UTILISATION COMME AGENT EPAISSISSANT DE FORMULATIONS AQUEUSES SALINES D'UN COPOLYMERE ACRYLIQUE HYDROSOLUBLE, RETICULE ET MODIFIE DE MANIERE HYDROPHOBE**
VERWENDUNG EINER SALZIGEN WÄSSRIGEN FORMULIERUNG EINES WASSERLÖSLICHEN VERNETZTEN UND HYDROPHOB MODIFIZIERTEN ACRYLCOPOLYMERS ALS VERDICKUNGSMITTEL
USE, AS THICKENING AGENT, OF A SALTY AQUEOUS FORMULATION OF A WATER-SOLUBLE CROSS-LINKED AND HYDROPHOBICALLY-MODIFIED ACRYLIC COPOLYMER

(30) Priorité: 03.07.2008 FR 0854526; 03.10.2008 FR 0856702
(43) Date de publication de la demande: 06.04.2011
(73) Titulaire: Coatex S.a.S, 69730 Genay (FR)
(72) Inventeur: KENSICHER, Yves, F-69620 Theize (FR); SUAU, Jean-Marc, F-69480 Lucenay (FR)
(74) Mandataire: Tetaz, Franck Claude Edouard
(86) Numéro de dépôt international: PCT/IB2009/005897
(87) Numéro de publication internationale: WO 2010/001206

(56) Documents cités:
- EP-A- 0 013 836
- EP-A- 0 979 833
- US-A- 4 892 916

## Description

De manière générale, il est bien connu d'épaissir un milieu aqueux par introduction de polymères hydrosolubles d'origine naturelle ou synthétique, telle que pour les premiers des gommes de guar ou xanthane, de la cellulose, des polysaccharides, et pour les seconds des polyacrylamides, des copolymères de l'acide acrylique et de l'acrylamide, des polyacrylates, des copolymères de l'acide (méth)acrylique avec d'autres monomères. On parle alors de la mise en oeuvre de ces polymères comme agents épaississants.

Il existe toutefois certaines applications où la présence d'électrolytes, tels que des sels de sodium, de calcium ou de magnésium, va altérer l'efficacité de tels épaississants : c'est par exemple le cas des fluides de forage pétrolier. De plus, ces fluides sont soumis à de très fortes contraintes de cisaillement : celles-ci constituent un deuxième facteur nuisant à l'action épaississante des polymères présents dans le milieu, notamment par destruction des chaînes macromoléculaires de longue taille. Enfin, la température d'utilisation des épaississants dans ces fluides peut dépasser 100 °C, atteignant souvent 150 °C, ce qui peut engendrer la dégradation thermique desdits épaississants.

Pour faire face à ces contraintes, l'homme du métier a privilégié deux type de solutions : celles à base de gomme xanthane, et celles qui reposent sur des homopolymères et des copolymères à base d'acrylamide. La gomme xanthane offre le triple intérêt de présenter une bonne tolérance aux sels, d'être stable jusqu'à des températures proches de 100 °C, et d'être peu sensible à la dégradation sous forte contrainte de cisaillement (c'est notamment l'enseignement de départ du document EP 0 226 097). En revanche, son coût élevé et sa sensibilité à la chaleur dès qu'on atteint des températures voisines de 150 °C, ce qui est coutumier dans des applications type fluides de forage, constituent de sérieux inconvénients à son utilisation dans de tels domaines.

L'autre voie repose sur la mise en oeuvre de polyacrylamides, et de copolymères de l'acrylamide avec d'autres monomères. La richesse de l'état de la technique dans ce domaine démontre que c'est l'alternative technique qu'a privilégiée l'homme du métier. A cet égard, on peut citer les documents FR 2 322 197, FR 2 498 200 et GB 2 077 750 relatifs à la mise en oeuvre de polyacrylamides, les documents US 4 268 400, US 4 423 199, US 4 782 120, US 4 566 978, US 4 677 152, US 4 600 515 et US 4 740 318, concernant l'utilisation de copolymères de l'acide (méth)acrylique, de l'acrylamide et éventuellement d'un autre monomère, et enfin les documents US 4 463 152, US 3 551 479, US 4 432 881 et US 4 728 696 concernant des copolymères de l'acrylamide avec un monomère tensio-actif. Le document US 4892916 décrit l'utilisation de copolymères sur base de monomères de type acide (méth)acrylique, esters d'acrylate d'alkyle, de monomère tensio-actif de type polyalkyleneglycol et de monomère réticulant comme épaissisants. Cependant, même s'ils permettent d'épaissir de manière satisfaisante un milieu aqueux riche en sels, ces polymères ne présentent pas les mêmes garanties en termes de résistance au cisaillement que les gommes xanthane.

Aussi, il existe un besoin important en termes d'épaississant à la fois stable thermiquement (notamment à des températures voisines de 150 °C), résistant à de fortes contraintes de cisaillement, tout en étant capable d'épaissir de manière notable un milieu aqueux en présence de sels. Poursuivant ses recherches, la Demanderesse a mis au point l'utilisation, comme agent épaississant d'une formulation aqueuse, d'un copolymère hydrosoluble constitué de 4 monomères particuliers où l'ajustement des ratios monomériques a donné des résultats tout à fait inattendus en terme d'efficacité épaississante, de résistance à la température et au cisaillement.

Ce copolymère appartient à la famille déjà connue des émulsions modifiées hydrophobiquement et alcali solubles, désignées sous l'acronyme anglo-saxon HASE. De manière générale, ces émulsions désignent des copolymères de l'acide (méth)acrylique, avec un ester (méth)acrylique, et un monomère hydrophobe. Ce dernier est susceptible de développer, en milieu aqueux, des interactions associatives qui contribuent à l'épaississement du milieu.

Ces structures ont été largement décrites dans la littérature telle qu'à travers les publications de Shay et al. : JCT Research (2005), 2(6), pp 423-433, Handbook of Coatings Additives (2nd Edition) (2004), pp 405-467, PMSE Preprints (2002), 87, pp 27-29, Polymeric Materials Science and Engineering (2001), 85, pp 213-214, Proceedings of the International Waterborne, High-Solids, and Powder Coatings Symposium (2002), 29th, pp 343-355. En outre, les méthodes de synthèse de ces polymères sont bien connues elles-aussi, telles que décrites dans les documents EP 0 013 836, US 4 268 641, US 4 421 902 ou encore US 4 138 381.

En revanche, rien dans l'état de la technique ne décrivait ou ne suggérait la composition très particulière objet de la présente invention. Au contraire, on savait même depuis longtemps que des copolymères contenant au moins un monomère carboxylique étaient susceptibles de précipiter en présence de cations divalents (Water Soluble Resins, 2^{nd} Ed., R.L. Davidson et M. Sitting, Rheinold, NY, pp 168), tels qu'apportés notamment par les électrolytes en solution qu'on trouve dans les fluides de forage. Ceci constituait un préjugé important pour l'homme du métier qui aurait souhaité développer des épaississants de nature acrylique dans de telles applications.

Il est néanmoins exact que des structures générales de type HASE ont été revendiquées dans les fluides de forage pétrolier : c'est ce que révèle le document ancien (publié en 1980), qui décrit des structures de type HASE nouvelles à l'époque, et revendique de manière très large leur mise en oeuvre dans de multiples applications, dont les fluides de forage. A cet égard, on peut imaginer que l'intention du rédacteur de ce document -en citant les fluides de forage- était de couvrir le maximum d'applications pour les nouvelles molécules revendiquées, sans pour autant avoir testé lesdites molécules dans chaque application. Enfin, il convient d'ajouter que sans l'apport de la présente invention, on ne pouvait aboutir à partir du document EP 0 011 806 à un produit efficace en terme d'épaississement d'une formulation aqueuse riche en sels, à la fois stable thermiquement et résistant au cisaillement.

Aussi, un premier objet de la présente invention réside dans l'utilisation, comme agent épaississant d'une formulation aqueuse, ayant une teneur en sels comprise entre 1g/L et 100g/L, d'un copolymère hydrosoluble ou alcali-soluble caractérisé en ce qu'il est constitué de, exprimé en pourcentage en poids de chacun de ses monomères :
a) 30 % à 45 % d'acide (méth)acrylique, qui est préférentiellement l'acide méthacrylique,
b) 50 % à 60 % d'acrylamide et/ou de N-méthylol et/ou d'un ester acrylique choisi parmi les (méth)acrylates d'éthyle et de butyle, et qui est préférentiellement l'acrylate d'éthyle,
c) 2% à 10 % d'un monomère hydrophobe de formule R₁ - (R₂O)ₘ - R₃, où :
   - R₁ désigne une fonction insaturée polymérisable, appartenant au groupe des vinyliques, des esters (méth)acrylique, des uréthannes insaturées vinyliques, des éthers allyliques ou vinyliques, et est préférentiellement la fonction ester (méth)acrylique,
   - R₂O désigne un groupe d'oxyde d'allylène ayant de 1 à 6 atomes de carbone, préférentiellement un groupe d'oxyde d'éthylène et d'oxyde de propylène, très préférentiellement un groupe d'oxyde d'éthylène,
   - m est un entier compris entre 20 et 50, préférentiellement entre 30 et 40,
   - R₃ désigne une chaîne alkyle linéaire comportant au moins 16 et au plus 26 atomes de carbone, préférentiellement au moins 18 et au plus 22 atomes de carbone,
d) 0,1 % à 4 % d'au moins un réticulant qui est préférentiellement l'éthyleneglycoldiméthacrylate (EDMA),

La somme des pourcentages a), b), c) et d) étant égale à 100%.

Cette utilisation est aussi caractérisée en ce que ledit copolymère est totalement ou partiellement neutralisé par au moins un agent de neutralisation, choisi parmi les hydroxydes et / ou oxydes de calcium, de magnésium, de lithium, de baryum, les hydroxydes de sodium, de potassium, l'ammoniaque, les amines primaires, secondaires, ou tertiaires, leurs mélanges, et est préférentiellement totalement ou partiellement neutralisé par l'hydroxyde de sodium.

Cette utilisation est aussi caractérisée en ce que ledit copolymère est obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, la polymérisation par transfert d'atome radicalaire (ATRP), la polymérisation radicalaire contrôlée par des dérivés soufrés, choisis parmi des carbamates, des dithioesters ou des trithiocarbonates (RAFT) ou des xanthates.

Cette utilisation est aussi caractérisée en ce que ledit copolymère peut, avant ou après la réaction de neutralisation totale ou partielle, être traité et séparé en plusieurs phases, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges, l'une des phases correspondant audit copolymère.

Cette utilisation d'un copolymère hydrosoluble, comme agent épaississant d'une formulation aqueuse, est aussi caractérisée en ce que ladite formulation possède une teneur en sels comprise entre 1 g/L et 100 g/L.

Cette utilisation d'un copolymère hydrosoluble, comme agent épaississant d'une formulation aqueuse, est aussi caractérisée en ce que ladite formulation est une formulation mise en oeuvre dans le domaine du forage. A titre non limitatif, il peut s'agir d'une boue de forage, d'un fluide de ré-injection ou encore de fracturation.

### EXEMPLES

### Exemple 1

Cet exemple concerne l'utilisation de différents polymères de l'art antérieur, et d'un polymère selon l'invention, en vue d'épaissir une formulation aqueuse contenant des sels.

### Essai n° 1

Cet essai illustre l'invention et met en oeuvre un copolymère, constitué de, exprimé en % en poids de chacun de ses monomères :
a) 40,3 % d'acide méthacrylique,
b) 54,1 % d'acrylate d'éthyle, 0,7 % d'acrylamide, 0,85 % de N-méthylol acrylamide,
c) 2,5 % d'un monomère hydrophobe de formule R₁ - (R₂O)ₘ - R₃, où :
   - R₁ désigne la fonction méthacrylate,
   - R₂O désigne un motif d'oxyde d'éthylène avec m = 25,
   - R₃ est un groupement hydrophobe alkyle linéaire constitué de 22 atomes de carbone,
d) 1,55 % d'EDMA.

### Essai n° 2

Cet essai illustre l'art antérieur et met en oeuvre un copolymère, constitué de, exprimé en % en poids de chacun de ses monomères :
a) 36,7 % d'acide méthacrylique,
b) 53,1 % d'acrylate d'éthyle,
c) 10,2 % d'un monomère hydrophobe de formule R₁ - (R₂O)ₘ - R₃, où :
   - R₁ désigne la fonction méthacrylate,
   - R₂O désigne un motif d'oxyde d'éthylène avec m = 25,
   - R₃ est un groupement hydrophobe alkyle linéaire constitué de 22 atomes de carbone.

### Essai n° 3

Cet essai illustre l'art antérieur et met en oeuvre un copolymère, constitué de, exprimé en % en poids de chacun de ses monomères :
a) 39,8 % d'acide méthacrylique,
b) 52,1 % d'acrylate d'éthyle, 7,7 % d'acrylate de butyle,
c) 0,4 % de diallyl phthalate.

### Essai n° 4

Cet essai illustre l'art antérieur et met en oeuvre un copolymère, constitué de, exprimé en % en poids de chacun de ses monomères :
a) 38,5 % d'acide méthacrylique,
b) 54,9 % d'acrylate d'éthyle,
c) 6,6 % d'un monomère hydrophobe de formule R₁ - (R₂O)ₘ - R₃, où :
   - R₁ désigne la fonction méthacrylate,
   - R₂O désigne un motif d'oxyde d'éthylène avec m = 25,
   - R₃ est un groupement hydrophobe alkyle ramifié constitué de 32 atomes de carbone.

### Essai n° 5

Cet essai illustre l'art antérieur et met en oeuvre un copolymère, constitué de, exprimé en % en poids de chacun de ses monomères :
a) 40,0 % d'acide méthacrylique,
b) 50,0 % d'acrylate d'éthyle,
c) 10,0 % d'un monomère hydrophobe de formule R₁ - (R₂O)ₘ - R₃, où :
   - R₁ désigne la fonction méthacrylate,
   - R₂O désigne un motif d'oxyde d'éthylène avec m = 25,
   - R₃ est un groupement hydrophobe alkyle ramifié constitué de 20 atomes de carbone.

### Essai n° 6

Cet essai illustre l'art antérieur et met en oeuvre un copolymère, constitué de, exprimé en % en poids de chacun de ses monomères :
a) 35,5 % d'acide méthacrylique,
b) 57,8 % d'acrylate d'éthyle,
c) 6,7 % d'un monomère hydrophobe de formule R₁ - (R₂O)ₘ - R₃, où :
   - R₁ désigne la fonction hémimaléate,
   - R₂O désigne un motif d'oxyde d'éthylène avec m = 25,
   - R₃ est un groupement hydrophobe alkyle ramifié constitué de 32 atomes de carbone.

### Essai n° 7

Cet essai illustre l'art antérieur et met en oeuvre un copolymère, constitué de, exprimé en % en poids de chacun de ses monomères :
a) 37 % d'acide méthacrylique,
b) 53 % d'acrylate d'éthyle,
c) 10,0 % d'un monomère hydrophobe de formule R₁ - (R₂O)ₘ - R₃, où :
   - R₁ désigne la fonction méthacrylate,
   - R₂O désigne un motif d'oxyde d'éthylène avec m = 25,
   - R₃ est un groupement hydrophobe alkyle ramifié constitué de 20 atomes de carbone.

### Essai n° 8

Cet essai illustre l'art antérieur et met en oeuvre un copolymère, constitué de, exprimé en % en poids de chacun de ses monomères :
a) 36,2 % d'acide méthacrylique,
b) 53,8 % d'acrylate d'éthyle,
c) 10,0 % d'un monomère hydrophobe de formule R₁ - (R₂O)ₘ - R₃, où :
   - R₁ désigne la fonction méthacrylate,
   - R₂O désigne un motif d'oxyde d'éthylène avec m = 25,
   - R₃ est un groupement hydrophobe alkyle ramifié constitué de 16 atomes de carbone.

### Essai n° 9

Cet essai illustre l'art antérieur et met en oeuvre un copolymère, constitué de, exprimé en % en poids de chacun de ses monomères :
a) 37,0 % d'acide méthacrylique,
b) 53,6 % d'acrylate d'éthyle,
c) 9,4 % d'un monomère hydrophobe de formule R₁ - (R₂O)ₘ - R₃, où :
   - R₁ désigne la fonction méthacryluréthanne (résultat de la condensation entre le toluène di-isocyanate et le méthacrylate d'éthylène glycol)
   - R₂O désigne un motif d'oxyde d'éthylène avec m = 50,
   - R₃ est un groupement hydrophobe aromatique nonylphénol.

### Essai n° 10

Cet essai illustre l'art antérieur et met en oeuvre un copolymère, constitué de, exprimé en % en poids de chacun de ses monomères :
a) 42,6 % d'acide méthacrylique,
b) 54,3 % d'acrylate d'éthyle, 0,87 % de N-méthylol acrylamide, et 0,7 % d'acrylamide,
c) 1,57 % d'EDMA.

En utilisant 280 g d'une eau désionisée contenant 60 g/l de chlorure de sodium, les essais sont réalisés en ajoutant 20 g de l'épaississant testé, en ajustant le pH à 7.8 - 8.2 au moyen d'hydroxyde de sodium 50 % et en mesurant la viscosité Brookfield™ à 0,3 tours / min et à 25 °C.

La solution épaissie est ensuite légèrement diluée avec l'eau saline précitée et après homogénéisation et vérification du pH, la viscosité Brookfield™ mesurée à nouveau. La courbe de viscosité en fonction de la concentration en polymère est ainsi tracée en concentration décroissante et la quantité de polymère nécessaire à l'obtention d'une viscosité Brookfield™ de 1 000 mPa.s est extrapolée. La quantité de polymère nécessaire est exprimée en pourcentage en poids de matière sèche par rapport à la masse de formulation, tous les polymères testés ayant une matière sèche de 30 %.

**Tableau 1**

| **Essai n°** | **Art Ant. Inv.** | **% utilisé pour obtenir 1000 mPa.s à 0,3 tours / min** |
|---|---|---|
| 1 | IN | 0,76 % |
| 2 | AA | 0,83 % |
| 3 | AA | 0,92 % |
| 4 | AA | 0,92 % |
| 5 | AA | 0,94 % |
| 6 | AA | 1,04 % |
| 7 | AA | 1,10 % |
| 8 | AA | 1,24 % |
| 9 | AA | 1,45 % |
| 10 | AA | 1,84 % |

Ces résultats démontrent très clairement la supériorité du polymère selon l'invention, dont la quantité engagée nécessaire à obtenir un certain niveau de viscosité est bien moindre que celle relative aux polymères de l'art antérieur.

### Exemple 2

Cet exemple concerne l'utilisation de différents polymères selon l'invention et selon l'art antérieur, qui ont été testés à raison de 1 % en poids de matière sèche de polymère, par rapport au poids total de la formulation envisagée. Cette formulation est une eau saline synthétique dont la composition est donnée dans le tableau 2.

**Tableau 2**

| **Sel minéraux** | **Masse en g/l** |
|---|---|
| Sulfate de sodium | 0,008 |
| Hydrogénocarbonate de sodium | 0,486 |
| Bromure de sodium | 0,175 |
| Chlorure de potassium | 0,729 |
| Chlorure de calcium di-hydraté | 3,455 |
| Chlorure de magnésium hexa-hydraté | 2,937 |
| Chlorure de strontium hexa-hydraté | 0,140 |
| Chlorure de baryum di-hydraté | 0,081 |
| Chlorure de sodium | 44,173 |

La formulation est réalisée puis le pH est porté à 8,8 - 9,2 au moyen d'hydroxyde de sodium 20 %. La formulation épaissie est alors laissée au repos pendant 48h00 puis sa viscosité est mesurée au moyen d'un viscosimètre Haake™ Rheostress 150 à 25°C sous un cisaillement de 0,1 s⁻¹.

Les résultats figurent dans le tableau 3.

Chacun des polymères testé est constitué d'acide méthacrylique (AMA), d'acrylate d'éthyle (AE), d'un monomère spécial (MS), et d'un système réticulant, correspondant respectivement aux espèces a, b, c et d selon les notations de l'invention ; leur % en poids par rapport au poids total des monomères est indiqué dans le tableau 3.

Chaque monomère spécial est constitué d'un monomère de formule R₁ - (R₂O)ₘ - R₃, où R₁ désigne la fonction méthacrylate, R₂O désigne le motif oxyde d'éthylène OE, les valeurs de m et la nature de R₃ étant indiqués dans le tableau 3.

Dans le tableau 3, on indique également que :
- iso C16 désigne l'alcool de Guerbet ramifié avec 16 atomes de carbone
- iso C20 désigne l'alcool de Guerbet ramifié avec 20 atomes de carbone
- TSP désigne le radical tristyrylphényl
- C22 désigne la chaîne grasse linéaire ayant 22 atomes de carbone

**Tableau 3**

| **essai n°** | **Art Ant. Inv.** | **AMA %** | **AE %** | **Acrylamide %** | **N-méthylol %** | **MS** | | | **réticulant EDMA** | **Viscosité (mPa.s)** |
|---|---|---|---|---|---|---|---|---|---|---|
| | | | | | | **%** | **m** | **R3** | | |
| 11 | AA | 32,65 | 54,4 | 0,7 | 0,8 | 9,9 | 25 | isoC16 | 1,55 | 20 |
| 12 | AA | 32,65 | 54,4 | 0,7 | 0,8 | 9,9 | 25 | isoC20 | 1,55 | 30 |
| 13 | AA | 40,15 | 54,1 | 05 | 0,8 | 2,7 | 25 | isoC16 | 1,55 | 40 |
| 14 | AA | 40,15 | 54,1 | 0,7 | 0,8 | 2,7 | 25 | TSP | 1,55 | 16 |
| 15 | IN | 40,95 | 54,8 | 0,7 | 0,8 | 1,2 | 25 | C22 | 1,55 | 200 |
| 16 | IN | 40,15 | 53,4 | 0,7 | 0,8 | 3,45 | 25 | C22 | 1,55 | 1000 |
| 17 | IN | 39,4 | 52,6 | 0,7 | 0,8 | 4,95 | 25 | C22 | 1,55 | 1000 |
| 18 | IN | 32,65 | 54,4 | 0,7 | 0,8 | 9,9 | 25 | C22 | 1,55 | 38 000 |
| 19 | IN | 39,25 | 52,2 | 0,68 | 0,83 | 5,5 | 45 | C22 | 1,54 | 5200 |
| 20 | IN | 38,55 | 51,5 | 0,68 | 0,83 | 6,9 | 60 | C22 | 1,54 | 2200 |
| 21 | IN | 38,5 | 54,1 | 0,7 | 0,85 | 2,7 | 25 | C22 | 3,15 | 900 |

La lecture du tableau 3 démontre que seuls les polymères selon l'invention, correspondant à des ratios monomériques bien particuliers, pour lesquels on a mis en oeuvre notamment une chaîne grasse alkyle linéaire, conduisent aux meilleurs résultats en terme d'épaississement.

### Exemple 3

Cet exemple concerne l'utilisation d'un polymère selon l'invention ainsi que d'une émulsion inverse à base d'acrylamide et d'une gomme xanthane selon l'art antérieur, sous très haute contrainte de cisaillement puis à température très élevée.

Dans chacun des essais n° 22 à 25, on met en oeuvre différents polymères, en vue d'épaissir une formulation aqueuse qui est l'eau saline synthétique telle que décrite dans l'exemple 2.

### Essai n° 22

Cet essai illustre l'art antérieur, et met en oeuvre 0,5 % en poids sec de matière active (par rapport au poids total de la formulation aqueuse saline) d'une émulsion inverse à base d'acrylamide, commercialisée sous le nom Flodril™ PAM 1040 par la société SNF Floerger™.

### Essai n° 23

Cet essai illustre l'art antérieur, et met en oeuvre 1,8 % en poids sec de matière active (par rapport au poids total de la formulation aqueuse saline) d'une gomme xanthane, commercialisée par la société Kelco™ sous le nom Kelzan™ XC.

### Essai n° 24

Cet essai illustre l'invention et met en oeuvre 1,2 % en poids sec de matière active (par rapport au poids total de la formulation aqueuse saline) d'une solution aqueuse d'un copolymère, constitué de, exprimé en % en poids de chacun de ses monomères :
a) 40,3 % d'acide méthacrylique,
b) 54,1 % d'acrylate d'éthyle, 0,7 % d'acrylamide, 0,85 % de N-méthylol acrylamide,
c) 2,5 % d'un monomère hydrophobe de formule R₁ - (R₂O)ₘ - R₃, où :
   - R₁ désigne la fonction méthacrylate,
   - R₂O désigne un motif d'oxyde d'éthylène avec m = 25,
   - R₃ est un groupement hydrophobe alkyle linéaire constitué de 22 atomes de carbone,
d) 1,55 % d'EDMA.

### Essai n° 25

Cet essai illustre l'invention et met en oeuvre 1,4 % en poids sec de matière active (par rapport au poids total de la formulation aqueuse saline) d'une solution aqueuse du copolymère selon l'essai n° 24.

Pour chacun des polymères précités, on a :
- déterminé la viscosité Brookfield™ à 20 tours par minute, à 25 °C, à t=0, notée Bk₂₀ (t=0),
- laissé reposer et déterminé la viscosité Brookfield™ à 20 tours par minute, à 25 °C, à t=24 heures, notée Bk₂₀ (t=24),
- appliqué alors à une partie de la formulation une très forte contrainte de cisaillement (23 000 tours / minute au moyen d'un agitateur Ultraturax™) et déterminé la viscosité Brookfield™ après cisaillement, à 20 tours par minute, à 25 °C, notée Bk₂₀ (23 000 tr/min),
- appliqué à l'autre partie de la formulation une très forte température (150 °C) et déterminé la viscosité Brookfield™, à 20 tours par minute, à 150 °C, notée Bk₂₀ (150°C).

Les résultats apparaissent dans le tableau 4 (les viscosités sont exprimées en mPa.s).

**Tableau 4**

| Essai n° | Invention Art Antérieur | BK₂₀ (t=0) | Bk₂₀ (t=24) | Bk₂₀ (23000 tr/min) | Bk₂₀ (150°C) |
|---|---|---|---|---|---|
| 22 | AA | 760 | 1100 | 1120 | <50 |
| 23 | AA | 350 | 1055 | 210 | 70 |
| 24 | IN | 1450 | 3210 | 3215 | 5200 |
| 25 | IN | 2940 | 5100 | 5200 | 14400 |

Ce tableau démontre que l'efficacité épaississante des polymères selon l'invention, dans des conditions normales de température et sans cisaillement (valeurs de viscosités initiales et après 24 heures) est supérieure à celle des polymères selon l'art antérieur.

En présence d'une très forte contrainte de cisaillement, la gomme xanthane n'épaissit plus le milieu alors que les polymères selon l'invention continuent à offrir les meilleurs résultats.

Enfin, lorsque la température est égale à 150 °C, les 2 polymères de l'art antérieur s'avèrent inefficaces ; les polymères selon l'invention, au contraire, continuent à épaissir avantageusement la solution saline.

## Revendications

1. Utilisation, comme agent épaississant d'une formulation aqueuse ayant une teneur en sels comprise entre 1 g/L et 100 g/L, d'un copolymère hydrosoluble ou alcali-soluble **caractérisé en ce qu'**il est constitué de, exprimé en pourcentage en poids de chacun de ses monomères :
a) 30 % à 45 % d'acide (méth)acrylique, qui est préférentiellement l'acide méthacrylique,
b) 50 % à 60 % d'acrylamide et/ou de N-méthylol et/ou d'un ester acrylique choisi parmi les (méth)acrylates d'éthyle et de butyle, et qui est préférentiellement l'acrylate d'éthyle,
c) 2 % à 10 % d'un monomère hydrophobe de formule R₁ - (R₂O)ₘ - R₃, où :
- R₁ désigne une fonction insaturée polymérisable, appartenant au groupe des vinyliques, des esters (méth)acrylique, des uréthannes insaturées vinyliques, des éthers allyliques ou vinyliques, et est préférentiellement la fonction ester (méth)acrylique,
- R₂O désigne un groupe d'oxyde d'alkylène ayant de 1 à 6 atomes de carbone, préférentiellement un groupe d'oxyde d'éthylène et d'oxyde de propylène, très préférentiellement un groupe d'oxyde d'éthylène,
- m est un entier compris entre 20 et 50, préférentiellement entre 30 et 40,
- R₃ désigne une chaîne alkyle linéaire comportant au moins 16 et au plus 26 atomes de carbone, préférentiellement au moins 18 et au plus 22 atomes de carbone,
d) 0,1 % à 4 % d'au moins un réticulant qui est préférentiellement l'éthyleneglycoldiméthacrylate (EDMA),
La somme des pourcentages a), b), c) et d) étant égale à 100 %.

2. Utilisation selon la revendication 1, **caractérisée en ce que** ledit copolymère est totalement ou partiellement neutralisé par au moins un agent de neutralisation, choisi parmi les hydroxydes et / ou oxydes de calcium, de magnésium, de lithium, de baryum, les hydroxydes de sodium, de potassium, l'ammoniaque, les amines primaires, secondaires, ou tertiaires, leurs mélanges, et est préférentiellement totalement ou partiellement neutralisé par l'hydroxyde de sodium.

3. Utilisation selon l'une des revendications 1 ou 2, **caractérisée en ce que** ledit copolymère est obtenu par des procédés de polymérisation radicalaire en solution, en émulsion directe ou inverse, en suspension ou précipitation dans des solvants, en présence de systèmes catalytiques et d'agents de transfert, ou encore par des procédés de polymérisation radicalaire contrôlée et préférentiellement par la polymérisation contrôlée par des nitroxydes (NMP) ou par des cobaloxymes, la polymérisation par transfert d'atome radicalaire (ATRP), la polymérisation radicalaire contrôlée par des dérivés soufrés, choisis parmi des carbamates, des dithioesters ou des trithiocarbonates (RAFT) ou des xanthates.

4. Utilisation selon l'une des revendications 1 à 3, **caractérisée en ce que** ledit copolymère peut, avant ou après la réaction de neutralisation totale ou partielle, être traité et séparé en plusieurs phases, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges, l'une des phases correspondant audit copolymère.

5. Utilisation d'un copolymère hydrosoluble, comme agent épaississant d'une formulation aqueuse selon l'une des revendications 1 à 4, **caractérisée en ce que** ladite formulation est une formulation mise en oeuvre dans le domaine du forage.

## Claims

1. Use as a thickening agent of an aqueous formulation having a salt content between 1 g/L and 100 g/L, of a water-soluble or alkali-soluble copolymer **characterized in that** it consists of, expressed in percentage by weight of each of its monomers:
a) 30% to 45% of (meth)acrylic acid which is preferentially methacrylic acid,
b) 50% to 60% acrylamide and/or N-methylol and/or an acrylic ester chosen from among the ethyl and butyl (meth)acrylates, and which is preferentially ethyl acrylate,
c) 2% to 10% of a hydrophobic monomer with the formula R₁ - (R₂O)ₘ - R₃, where:
- R₁ designates an unsaturated polymerisable function belonging to the vinyls group, the (meth)acrylic esters, the unsaturated vinyl urethanes, the allylic or vinyl ethers, and is preferentially the (meth)acrylic ester function,
- R₂O designates an alkylene oxide group with 1 to 6 carbon atoms, preferentially an ethylene oxide and propylene oxide group, very preferentially an ethylene oxide group.
- m is an integer between 20 and 50, preferentially between 30 and 40,
- R₃ designates a linear alkyl chain with at least 16 and not more than 26 carbon atoms, preferentially at least 18 and not more than 22 carbon atoms,
d) 0.1% to 4% of at least one cross-linking agent that is preferentially ethylene glycol dimethacrylate (EDMA),
The sum of the percentages a), b), c) and d) being equal to 100%.

2. Use according to claim 1 **characterized in that** said copolymer is totally or partially neutralized by at least one neutralizing agent chosen from among the hydroxides and/or oxides of calcium, magnesium, lithium, barium, the hydroxides of sodium, potassium, ammonium, the primary, secondary, or tertiary amines, their mixtures, and is preferentially totally or partially neutralized by sodium hydroxide.

3. Use according to one of claims 1 or 2 **characterised in that** the said copolymer is obtained by processes of radical polymerization in solution, in direct or inverse emulsion, in suspension or precipitation in solvents, in the presence of catalytic systems and transfer agents, or again by controlled radical polymerization processes and preferentially by polymerization controlled by nitroxides (NMP) or by cobaloxymes, by atom transfer radical polymerization (ATRP), by controlled radical polymerization by sulphur derivatives, selected from among the carbamates, dithioesters or trithiocarbonates (RAFT) or the xanthates.

4. Use according to one of claims 1 to 3 **characterized in that** the said copolymer can be, before or after the total or partial neutralization reaction, treated and separated into several phases by one or more polar solvents preferentially belonging to the group consisting of water, methanol, ethanol, propanol, isopropanol, the butanols, acetone, tetrahydrofuran or their mixtures, with one of the phases corresponding to the said copolymer.

5. Use of a water-soluble copolymer as a thickening agent of an aqueous formulation according to one of claims 1 to 4 **characterized in that** said formulation is a formulation used in the field of drilling.

## Patentansprüche

1. Verwendung eines wasserlöslichen oder laugenlöslichen Copolymers als Verdickungsmittel für eine wässrige Formulierung mit einem Salzgehalt im Bereich von 1 g/L bis 100 g/L, wobei es **dadurch gekennzeichnet ist, dass** es, jeweils ausgedrückt in Gewichtsprozent, aus den folgenden Monomeren besteht:
a) 30 % bis 45 % an (Meth)acrylsäure, wobei es sich vorzugsweise um Methacrylsäure handelt,
b) 50 % bis 60 % an Acrylamid und/oder an N-Methylol und/oder eines Acrylsäureesters, der aus den Ethyl- und Butyl(meth)acrylaten ausgewählt ist und bei dem es sich vorzugsweise um Ethylacrylat handelt,
c) 2 % bis 10 % eines hydrophoben Monomers der Formel R₁ - (R₂O)ₘ - R₃, wobei:
- R₁ eine polymerisierbare ungesättigte funktionelle Einheit bezeichnet, die der Gruppe der Vinylverbindungen, der (Meth)acrylsäureester, der ungesättigten Vinylurethane, der Allyl- oder Vinylether angehört und bei der es vorzugsweise um die funktionelle Einheit (Meth)acrylsäureester handelt.
- R₂O eine Alkylenoxidgruppe mit 1 bis 6 Kohlenstoffatomen, vorzugsweise eine Ethylenoxid- und Propylenoxidgruppe, mit sehr starkem Vorzug eine Ethylenoxidgruppe, bezeichnet,
- m eine ganze Zahl im Bereich von 20 bis 50, vorzugsweise von 30 bis 40, ist,
- R₃ eine geradkettige Alkylkette bezeichnet, die mindestens 16 und höchstens 26 Kohlenstoffatome, vorzugsweise mindestens 18 und höchstens 22 Kohlenstoffatome, aufweist,
d) 0,1 % bis 4 % mindestens eines Vernetzungsmittels, wobei es sich vorzugsweise um Ethylenglykoldimethacrylat (EDMA) handelt,
wobei die Summe der Prozentanteile a), b), c) und d) gleich 100 % ist.

2. Verwendung nach Anspruch 1, **dadurch gekennzeichnet, dass** das Copolymer vollständig oder teilweise mittels mindestens eines Neutralisierungsmittels neutralisiert wird, welches aus den Hydroxiden und/oder Oxiden von Calcium, Magnesium, Lithium, Barium, den Hydroxiden von Natrium, Kalium, aus Ammoniumhydroxid, den primären, sekundären oder tertiären Aminen, aus deren Mischungen ausgewählt ist, und es vorzugsweise vollständig oder teilweise mittels Natriumhydroxid neutralisiert wird.

3. Verwendung nach einem der Ansprüche 1 oder 2, **dadurch gekennzeichnet, dass** das Copolymer durch Verfahren der radikalischen Polymerisation in Lösung, in direkter oder umgekehrter Emulsion, in Suspension oder mit Fällungsvorgang in Lösungsmitteln, in Gegenwart von katalytischen Systemen und Kettenübertragungsmitteln erhalten wird, oder auch durch Verfahren der kontrollierten radikalischen Polymerisation und vorzugsweise durch eine Polymerisation, welche mittels Nitroxiden (NMP) oder mittels Cobaloximen kontrolliert wird, durch eine radikalische Polymerisation unter Atomtransfer (ATRP), durch eine radikalische Polymerisation, welche mittels schwefelhaltiger Verbindungen, die aus den Carbamaten, den Dithioestem oder den Trithiocarbonaten (RAFT) oder den Xanthogenaten ausgewählt sind, kontrolliert wird.

4. Verwendung nach einem der Ansprüche 1 bis 3, **dadurch gekennzeichnet, dass** das Copolymer, vor oder nach der Reaktion der vollständigen oder teilweisen Neutralisierung, behandelt und in mehrere Phasen aufgetrennt werden kann, und zwar mittels eines oder mehrerer polarer Lösungsmittel, die vorzugsweise der Gruppe angehören, welche aus Wasser, Methanol, Ethanol, Propanol, Isopropanol, den Butanolen, Aceton, Tetrahydrofuran oder deren Mischungen besteht, wobei eine der Phasen dem Copolymer entspricht.

5. Verwendung eines wasserlöslichen Copolymers als Verdickungsmittel für eine wässrige Formulierung nach einem der Ansprüche 1 bis 4, **dadurch gekennzeichnet, dass** es sich bei der Formulierung um eine Formulierung handelt, die beim Bohren eingesetzt wird.
